# EUROPÄISCHE PATENTSCHRIFT

(11) **EP 2 080 049 B1**
(45) Veröffentlichungstag und Bekanntmachung des Hinweises auf die Patenterteilung: **17.11.2010**
(21) Anmeldenummer: 07785659.9
(22) Anmeldetag: 11.07.2007
(51) Int. Cl.: G02B 6/38

(54) **LUFTGEKÜHLTES STECKERBAUTEIL FÜR EINEN LICHTWELLENLEITER**
AIR-COOLED PLUG PART FOR AN OPTICAL WAVEGUIDE
ÉLÉMENT CONNECTEUR REFROIDI À L'AIR POUR UN GUIDE D'ONDES OPTIQUES

(30) Priorität: 22.07.2006 DE 102006034031
(43) Veröffentlichungstag der Anmeldung: 22.07.2009
(73) Patentinhaber: Berger, Roland, 82131 Buchendorf/Gauting (DE)
(72) Erfinder: Berger, Roland, 82131 Buchendorf/Gauting (DE)
(86) Internationale Anmeldenummer: PCT/DE2007/001291
(87) Internationale Veröffentlichungsnummer: WO 2008/011868

(56) Entgegenhaltungen:
- WO-A-93/16407
- DE-A1- 4 227 803
- DE-A1- 19 860 485
- JP-A- 3 033 808
- JP-A- 59 121 007
- JP-A- 60 028 607
- US-A- 4 830 462
- US-A- 5 076 660

## Beschreibung

### Gebiet der Erfindung

Die vorliegende Erfindung betrifft ein luftgekühltes Steckerbauteil für einen Lichtwellenleiter (LWL), der sich insbesondere zur Übertragung von Laserstrahlung eignet.

### Stand der Technik

Bei der Übertragung von Laserstrahlung von einer Strahlquelle zu einer Bearbeitungsstation liegt eine Strahlenergie vor, die typischerweise im Bereich von wenigen Milliwatt bis zu einigen Kilowatt liegt. Diese Energie wird über einen LWL geführt, der im Allgemeinen einen Durchmesser von 200 bis 600 µm hat, in Ausnahmefällen in den Bereich bis ca. 1,2 mm. Ein LWL besteht im wesentlichen aus einer Kernfaser (Core) und einer umgebenden Umhüllung (Cladding), die beide aus Quarzglas sind. Daran schließt sich eine Silikonmasse an, und als äußerste Schicht wird vielfach eine Kunststoffummantelung verwendet. Der Strahl läuft normalerweise in der Kernfaser; sitzt die Strahlung nicht mittig im Core, findet ein Energieeintrag in das Cladding statt. Der auf die hohe übertragene Energie zurückzuführenden Erwärmung wird mit einer Kühlung entgegengewirkt, die wenigstens über einen Teil der Länge des LWL wirkt, insbesondere auch an Steckerbauteilen.

Mit Kühlung versehene Steckerbauteile für Lichtwellenleiter sind bekannt. Eine Möglichkeit ist, LWL und Steckerbauteil mit Wasser zu kühlen. Hierzu wird das Cladding wenigstens auf einem Teil seiner Länge mit Wasser umspült und intensiv gekühlt; die normalerweise anfallende Verlustwärme kann von Wasser aufgrund seiner hohen Wärmekapazität leicht abgeführt werden.

Bei der Übertragung von Laserstrahlung im Kilowattbereich kann sich jedoch das Cladding an manchen Stellen übermäßig stark erwärmen; die Ursachen hierfür sind dem Fachmann bekannt, aber für die vorliegende Erfindung nicht relevant und werden daher auch nicht näher erläutert. Eine typische maximale Betriebstemperatur, die von den Materialien noch toleriert wird, liegt bei ca. 300°C.

Es hat sich nun in der Praxis als Problem herausgestellt, dass trotz Wasserkühlung die Oberflächentemperatur an einem Lichtwellenleiter auf über 100°C ansteigen kann, was zu Dampfbläschen führen muss. Dieses ist allgemein in der Lasertechnik an wassergekühlten Optiken bekannt. Bei erneutem Wasserkontakt des zuvor von dem Bläschen umgebenen Bereichs erleidet das Quarzglasmaterial eine Schockwirkung, die oftmals Ausgangspunkt für eine komplette Zerstörung des LWL ist. Ein weiteres Problem besteht darin, die Dichtigkeit des Wasserkreislaufs vor dem Hintergrund thermischer Schwankungen aufrechtzuerhalten. Bei solchen thermischen Schwankungen sind die verschiedenen Längenausdehnungskoeffizienten der Materialien (häufige Paarung Glas und Metall) Ursache für derlei Dichtigkeitsprobleme.

Diese in der Übertragung von Laserenergie bekannten Probleme haben zu der Überlegung geführt, als Kühlmedium Luft oder ein beliebiges Gas anstelle von Wasser zu verwenden. Luft hat den Vorteil, dass das oben beschriebene Phänomen des thermischen Schocks nicht auftritt; die wesentlich geringere Wärmekapazität von Luft erweist sich hier gerade als vorteilhaft. Im Gegensatz zu einer Wasserkühlung ist bei der Kühlung mit Luft der Betriebstemperaturbereich der beteiligten Optiken wesentlich größer und kann z.B. bis 300°C - 400°C gehen. Auch eine Kühlung mit flüssiger Luft oder flüssigen Gasen ist angedacht. Hierdurch wird der Temperaturbereich des Kühlmediums wesentlich vergrößert und kann zum Beispiel bei -40°C und darunter beginnen. Im Rahmen von umfassenden Vorversuchen hat sich auch gezeigt, dass der Abtransport von Verlustwärme vom LWL ohne Weiteres auch mit Luft bewerkstelligt werden kann. Dies ist darauf zurückzuführen, dass die zu kühlende Masse relativ gering ist.

Ein gattungsgemäßes Bauteil mit Luft- bzw. Gaskühlung ist aus der WO 1993/16407 A1 bekannt. Ein Faserbündel 14 ist in einer Hülse 18 aufgenommen. Die Hülse 18 wiederum befindet sich in einem Gehäuse 19. Zwischen Faserbündel 14 und Hülse 18 ist ein erster Raum definiert, in den das Kühlfluid einströmt. Zwischen Hülse 18 und Gehäuse 19 ist ein zweiter Raum definiert, der auch vom Kühlfluid durchströmt wird und mit einer Ausströmöffnung 30 versehen ist. Die Stirnseite des Faserbündels sowie eine Dichtscheibe aus optisch transparentem Material werden vom Kühlfluid überstrichen.

DE 42 39 829 A1 zeigt ein medizinisches Laserbehandlungsgerät mit zwei Luftkühlsystemen und einem Flüssigkeitskühlsystem. Ein erster Luftstrom kühlt das auskoppelseitige Ende eines Wellenleiters und eine Kühlkammer, in die der Wellenleiter hineinragt. Auch eine Schutzplatte 8 aus Glas wird von diesem Luftstrom gekühlt. Ein zweiter Luftstrom kühlt das einkoppelseitige Ende einer Fasersonde 21.

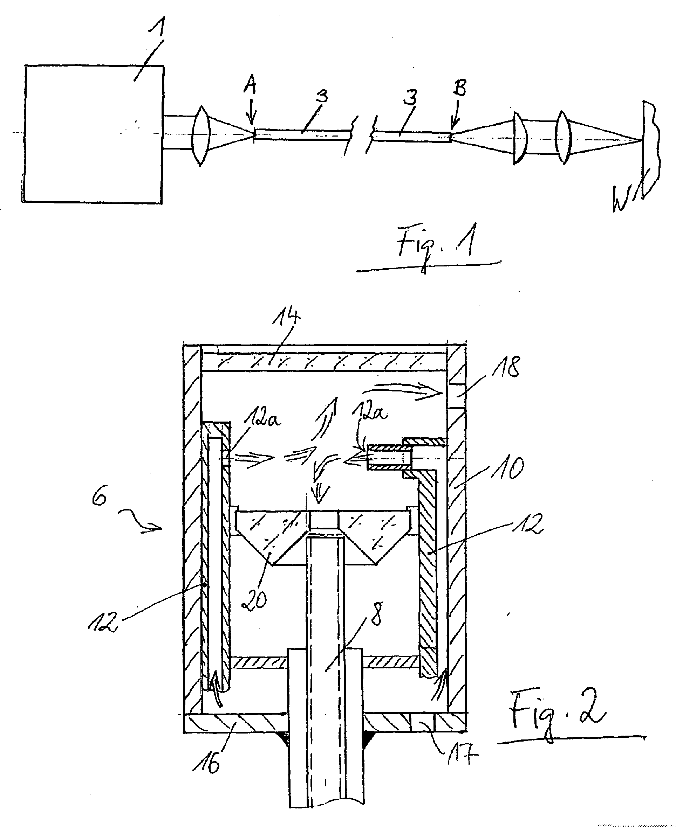

US 4 382 024 beschreibt einen Katheter mit Lichtwellenleiter 3. Dieser ragt in eine Kammer 5, in die (bei Pos. 6', Fig. 2) ein Strom aus Kühlwasser einfließen kann. Ein Hülse 10 schafft einen ersten Raum für das einströmende Fluid und einen zweiten Raum für das gegensinnig zurückströmende, bei 7' ausströmende Fluid. Auch hier sind Lichtleiter und eine optische Linse 4 direkt vom Kühlfluid benetzt.

DE 195 12 350 A1 zeigt ein Faserbündel, in die über einen sog. Absorptionsstab Licht eingekoppelt wird. Fig. 1 zeigt ein Gehäuse mit eingeschobener Hülse, die einen Einströmraum und einen Ausströmraum für das Kühlfluid schafft.

DE 4 227 803 A1 beschreibt eine Laserbehandlungsvorrichtung, wobei eine Kühlkammer zum Kühlen der Faseroptiken vorgesehen ist.

Es ist die Aufgabe der Erfindung, mittels eines einem Steckerbauteil gezielt zugeführten Gasstroms einerseits die Stirnseite eines in dem Steckerbauteil angeordneten Lichtwellenleiters zu kühlen und andererseits gleichzeitig mittels dieses Gasstroms ein Schutzglas des Steckerbauteils zu reinigen.

Die Erfindung besteht aus einem Steckerbauteil gemäß den Ansprüchen 1 oder 8.

### Kurze Beschreibung der Zeichnungen

Figur 1 zeigt schematisch eine Übertragungsstrecke eines Laserstrahls von einem Laser bis zu einer Bearbeitungsstation;
Figur 2 zeigt eine stark vereinfachte Ansicht des erfindungsgemäßen luftgekühlten Steckerbauteils; und
Figur 3 ist eine Detailansicht des erfindungsgemäßen Steckerbauteils in einer abgewandelten Ausführungsform, aus der die Strömungswege des Kühlmediums hervorgehen.

### Ausführliche Beschreibung der Erfindung

Fig. 1 zeigt in stark schematisierter Form eine beispielhafte Übertragungsstrecke für einen Laserstrahl. In Fig. 1 ist links eine Laserquelle 1 schematisch dargestellt; hier kann es sich z.B. um einen YAG-Laser handeln, der Laserstrahlung im Bereich bis zu 6 kW und mehr erzeugt. Diese Strahlung wird über eine Fokussierlinse zu einem LWL 3 geführt, um in diesen an der mit A bezeichneten Stelle eingekoppelt zu werden. Der LWL hat die Aufgabe, den Laserstrahl über oftmals beträchtliche Weglängen von bis zu 80 m zu einer Bearbeitungsstation zu führen, an der der Strahl zum Schneiden, Schweißen, Beschriften, Abtragen, Perforieren usw. eingesetzt wird. Bei B tritt der Laserstrahl aus dem LWL wieder aus, läuft durch eine Kollimationslinse, eine zweite Fokussierlinse und gelangt schließlich auf das zu bearbeitende Werkstück W.

An den mit A und B bezeichneten Stellen kann das erfindungsgemäße Steckerbauteil zum Einsatz kommen, wobei auf den Einsatz beim Auskoppeln des Strahls an der Stelle A oder B aus Funktions- und Kostengründen auch verzichtet werden kann.

Fig. 2 zeigt eine Ansicht des erfindungsgemäßen Steckerbauteils im Einzelnen, das insgesamt mit der Bezugszahl 6 gekennzeichnet ist. Es besteht im Wesentlichen aus einem meist zylindrischen Gehäuse 10, das mit einer Endplatte 16 verschlossen ist. Die Endplatte dient auch als Kabelzugentlastung. Durch eine Öffnung in der Endplatte 16 tritt der LWL 8 in das Steckerbauteil 6 ein. Der genaue Aufbau des LWL aus Quarzkern, Quarzumhüllung und den mehreren Schutzhüllen ist für die Erfindung nicht wesentlich, weshalb auch nicht näher hierauf eingegangen wird. Wichtig ist nur, dass innerhalb des Steckerbauteils der LWL auf einem Teil seiner Länge "abisoliert" ist, so dass stirnseitig das Core und mantelseitig das Cladding zum Vorschein kommt. An der der Endplatte 16 gegenüberliegenden Seite befindet sich ein Schutzglas 14, das eine planparallele Platte aus Quarzglas ist, die beidseitig entspiegelt ist. Durch diese läuft der vom Laser ankommende Strahl in das Steckerbauteil hinein (Stelle A) oder aus dem Steckerbauteil wieder hinaus (Stelle B). Außerdem ist das Schutzglas 14 nötig, um einen Druck im Inneren des Steckerbauteils aufzubauen und Verunreinigungen, wie sie bei Einsatz unter Industriebedingungen vorkommen, fernzuhalten. Bezugszahl 17 kennzeichnet eine Einlassbohrung für das Kühlmedium. Bei 18 ist mindestens eine Auslassbohrung gezeigt, durch die das zugeführte Kühlmedium (im Allgemeinen Luft) wieder abfließt.

Das Schutzglas 14 ist evtl. mit Dichtungen am Gehäuse 10 angebracht; es kann im Falle einer Schädigung ersetzt werden. Dabei hat sich gezeigt, dass eventuelle Ablagerungen vorzugsweise im Randbereich des Schutzglases auftreten, während der Mittenbereich, durch den der Strahl hindurch tritt, perfekt sauber bleibt.

In Fig. 2 ist darüber hinaus noch ein Kegelprisma 20 zu sehen, das konzentrisch zum LWL angeordnet ist und dafür sorgt, dass keine Strahlung in das Cladding gelangt. Das Kegelprisma wirkt sozusagen als Einstrahlschutz oder auch Blende. Es kann für manche Anwendungen auch weggelassen werden. Der an der Bearbeitungsstation zum Einsatz kommende Nutzstrahl befindet sich in der Kernfaser. Das Kegelprisma 20 ist hier nur beispielhaft als optisches Element genannt; es wäre auch denkbar, anstelle des Kegelprismas eine Linse, planparallele Platte, ein anders geartetes Prisma oder dgl. einzusetzen.

Des Weiteren ist mit 12 eine Kühlmanschette gezeigt, die im Wesentlichen aus einem hülsenförmigen Teil besteht, das eine beliebige Anzahl von Ausströmöffnungen 12a aufweist. Diese Ausströmöffnungen können in beliebiger Form realisiert sein; eine Möglichkeit besteht darin, die Hülse innenseitig mit einer Vielzahl von Ausströmröhrchen 13 zu versehen, die im Wesentlichen radial angeordnet sind und alle auf einen Punkt "zielen", der auf der Mittellängsachse der Kühlmanschette 12 liegt. Die Mittellängsachse entspricht der optischen Achse der Vorrichtung. Die Ausströmröhrchen können alle in einer Ebene liegen, also senkrecht zur Mittellängsachse ausgerichtet sein. Es ist aber auch möglich, sie unter einem bestimmten Winkel nach oben oder unten weisend anzuordnen, wobei die Röhrchen alle unter demselben Winkel in Bezug auf die Horizontale angeordnet sind. Aus Fertigungsgründen können die Ausströmröhrchen aber auch weggelassen werden und die Kühlmanschette dann mit entsprechenden schlitzförmigen oder runden Ausströmöffnungen versehen sein. Dies ist in der linke Hälfte der Fig. 2 dargestellt. Die Doppelpfeile geben grob die Luftströmungen an.

Die Kühlmanschette 12 ist hohl bzw. doppelwandig ausgeführt. Die Ausströmröhrchen bzw. Ausströmöffnungen sind vorzugsweise rotationssymmetrisch angeordnet, wobei aber eine unsymmetrische Anordnung auch angedacht ist.

Die Kühlluft, die der Kühlmanschette zugeführt wird, kann mit modernen, standardmäßigen Luftaufbereitungseinheiten in einem ausreichend starken Grad gereinigt werden. Die Kühlluft darf natürlich keine festen Partikel und keine Wasser- oder Öltröpfchen mitführen. Als besonders vorteilhaft erscheint die Verwendung des (ohnehin meist hochreinen) Prozessgases, das an der Bearbeitungsstation als Hilfsmittel beim Schneiden, Schweißen usw. eingesetzt wird. Auch schwerere Gase wie z.B. Xenon mit dementsprechend höherer Wärmeabfuhrleistung können Verwendung finden.

Die Kühlvorrichtung der vorliegenden Erfindung hat sich als extrem wirksam erwiesen, nicht nur was den Abtransport von Wärme anbelangt. Es konnte auch ein starker Reinigungseffekt beobachtet werden, d.h. eventuell an der Stirnfläche des LWL anhaftende Partikel konnten entfernt werden, genauso wie irgendwelche Schmutzpartikel am Schutzglas 14. Dies ist ein selbstreinigender Effekt und günstig für den Fall, dass z.B. während der Montage Verunreinigungen den Weg in das Innere des Steckerbauteils gefunden haben.

Die Tatsache, dass Schutzglas und Stirnseite des LWL im Betrieb sehr sauber bleiben, ist auf die besonderen Strömungsverhältnisse im Inneren des Steckerbauteils zurückzuführen. Der Erfinder geht davon aus, dass die aus den Ausströmöffnungen austretenden Luftstrahlen in der Mitte aufeinander treffen und eine stark turbulente Strömung hervorrufen, wobei offensichtlich eine starke Strömungstendenz zur Stirnseite des LWL und zur Mitte des Schutzglases besteht. Die Ausströmöffnungen sind direkt auf die Stirnseite des LWL gerichtet, um somit die Anströmung derselben noch weiter zu erhöhen. Ebenso könnte man durch eine geeignete Ausrichtung der Ausströmröhrchen dafür sorgen, das Schutzglas stärker anzuströmen. Noch darüber hinaus kann ein Teil der Ausströmröhrchen so ausgerichtet sein, dass sie auf die Mitte des Schutzglases zielen, während die anderen Ausströmröhrchen bevorzugt auf die Stirnseite des LWL gerichtet sind.

Auf der Stirnseite des LWL kann optional eine Antireflexschicht (AR-Schicht) 20a aufgebracht sein, die den Wirkungsgrad des Strahlendurchgangs verbessert. Darüber hinaus ist eine AR-Schicht 20b vorgesehen, die dafür sorgt, dass die durch Totalreflexion im Cladding verbleibende Reststörstrahlung aus dem Cladding entweichen kann; dadurch erfolgt keine weitere Erwärmung der Kunststoffe (Silikon), die sich zwischen Cladding und seinem Schutzmantel befinden. Diese abgestrahlte Reststörstrahlung wird durch das Kühlmedium abgeführt.

Diese Schichten 20a und 20b sind im Allgemeinen sehr empfindlich und haben durch eine verbesserte Kühlung eine längere Lebensdauer. Es hat sich in Versuchen gezeigt, dass diese AR-Schichten durch die Luftströmungsverhältnisse im Inneren des Steckerbauteils besser vor Überhitzungen geschützt sind. Von Vorteil ist auch, dass die Luft nach der Aufbereitung sehr trocken ist, da sich dann die AR-Schichten nicht durch Feuchtigkeitsaufnahme verändern.

Dadurch, dass im Steckerbauteil Überdruck herrscht, ist es auch in sehr rauer, verunreinigter (Öl, Staub, Ruß, Abbrand) Industrieumgebung einsetzbar.

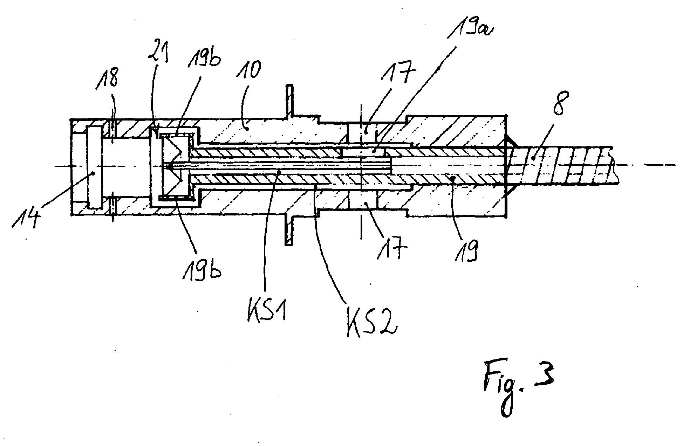

Fig. 3 zeigt eine konkrete Ausführungsform eines erfindungsgemäßen Steckerbauteils. Man sieht den LWL, der im Bereich b "abisoliert ist. In dieser Figur wird deutlich, dass der Kühlstrom des Kühlmediums sich aufteilt: Hierzu ist in das Steckerbauteil eine Einsatzhülse 19 eingebracht, die mindestens eine erste Bohrung 19a und zweite Bohrungen 19b aufweist. Der Kühlstrom tritt durch die Einlassbohrungen 17 ein. Ein Teil KS1 des Kühlstroms gelangt durch die Bohrung 19a in den Bereich zwischen Cladding und Einsatzhülse, wodurch das Cladding auf dem "abisolierten" Teil vom Kühlmedium bestrichen wird. Der andere Teil KS2 des Kühlstroms strömt durch den Ringraum, der zwischen Gehäuse 10 und Einsatzhülse 19 gebildet ist, in Richtung des Endes des LWL (in der Figur nach links). Dieser Teil KS2 des Kühlstroms umströmt den Bereich des Kegelprismas und erzeugt im mit 21 bezeichneten Bereich die zuvor erläuterte, turbulente Luftströmung. Bei 19b tritt der Kühlstrom KS 1 nach Überstreichen des Kegelprismas wieder nach außen und vereinigt sich mit dem Strom KS2. Die Kühlströme KS1, KS2 treten durch die Auslassbohrungen 18 aus dem Steckerbauteil wieder aus.

Die vorliegende Erfindung kann vorteilhafter Weise auch in so genannten Faserlasern eingesetzt werden, in denen der Laserstrahl direkt in einer Wellenleiterfaser erzeugt wird. Hier treten die Vorzüge der Erfindung besonders zutage, da Faserlaser im Betrieb eine hohe Temperatur entwickeln und die eingangs beschriebenen Wärmeprobleme bei wassergekühlten Steckerbauteilen in noch stärkerem Maß bestehen.

## Patentansprüche

1. Steckerbauteil für einen Lichtwellenleiter (8), mit
- einem zylindrischen Gehäuse (10) mit einem an einem Ende des Gehäuses (10) vorgesehenen Schutzglas (14),
- einem in dem Gehäuse angeordneten Lichtwellenleiter (8) mit einer endseitigen Stirnseite (20a),
- zumindest einer Einlassbohrung (17) und zumindest einer Auslassbohrung (18) für ein gasförmiges Kühlmedium, und
- einer hülsenförmigen Kühlmanschette (12), welcher das gasförmige Kühlmedium zugeführt wird, und
- einer Vielzahl von Ausströmöffnungen (12a), die radial an der Innenseite in der Kühlmanschette (12) angeordnet sind,
wobei die Ausströmöffnungen (12a) derart angeordnet sind, dass das der Kühlmanschette (12) zugeführte gasförmige Kühlmedium in Form von Strömungen aus der Vielzahl der Ausströmöffnungen (12a) austritt,
wobei die Strömungen des gasförmigen Kühlmediums in der Mitte der Kühlmanschette (12) aufeinandertreffen,
wobei ein erster Anteil der Strömungen zur Stirnseite (20a) des Lichtwellenleiters (8) und ein zweiter Anteil der Strömungen zur Mitte des Schutzglases (14), das an seiner Innenseite vom Kühlmedium überstrichen wird, gerichtet sind,
wobei im Inneren des Gehäuses ein Kegelprisma (20) vorgesehen ist.

2. Steckerbauteil nach Anspruch 1, wobei die Kühlmanschette (12) eine Vielzahl von Ausströmröhrchen (13) aufweist, die auf einen gemeinsamen Punkt auf der Längsmittelachse der Kühlmanschette (12) gerichtet sind.

3. Steckerbauteil nach einem der vorhergehenden Ansprüche, wobei der Lichtwellenleiter (8) im Inneren des Gehäuses (10) über wenigstens einen Teil seiner Länge abisoliert und seine Stirnseite frei zugänglich ist.

4. Steckerbauteil nach einem der vorhergehenden Ansprüche, wobei das Kegelprisma (20) allseitig vom Kühlmedium umspült ist.

5. Steckerbauteil nach Anspruch 4, wobei an der Stirnseite des Lichtwellenleiters (8) eine Antireflexschicht (20a) vorhanden ist.

6. Steckerbauteil nach einem der vorhergehenden Ansprüche, wobei das Kühlmedium Luft, ein Gas wie O₂, N₂, Ar, CO₂, He, Xe, oder eine Kombination aus diesen ist.

7. Steckerbauteil nach einem der Ansprüche 1 bis 6, wobei das Kühlmedium eine Temperatur im Bereich von ca. -40°C bis ca. 300°C hat.

8. Steckerbauteil für einen Lichtwellenleiter (8), mit
- einem zylindrischen Gehäuse (10) mit einem an einem Ende des Gehäuses (10) vorgesehenen Schutzglas (14),
- einem in dem Gehäuse angeordneten Lichtwellenleiter (8) mit einer endseitigen Stirnseite,
- zumindest einer Einlassbohrung (17) und zumindest einer Auslassbohrung (18) für ein gasförmiges Kühlmedium, und
- einer in das Steckerbauteil eingebrachten Einsatzhülse (19), wobei
o zwischen dem abisolierten Teil des Lichtwellenleiters (8) und der Einsatzhülse (19) ein erster Ringraum ausgebildet ist,
o zwischen der Einsatzhülse (19) und dem Gehäuse (10) ein zweiter Ringraum ausgebildet ist,
o der erste Ringraum und der zweite Ringraum über in die Einsatzhülse (19) eingebrachte Bohrungen (19a, b) verbunden sind, und
o an einem Ende der Einsatzhülse (19) ein Kegelprisma (20) angeordnet ist,
wobei der Einsatzhülse (19) das gasförmige Kühlmedium in Form einer Strömung zugeführt wird,
wobei eine erste Einzelströmung (KS1) durch den ersten Ringraum und eine zweite Einzelströmung (KS2) durch den zweiten Ringraum geführt wird,
wobei die erste Einzelströmung (KS1) den abisolierten Teil des Lichtwellenleiters (8) und das Kegelprisma (20) überstreicht und nach dem Überstreichen des Kegelprismas (20) bei der Bohrung (19b) mit der zweiten Einzelströmung (KS2) vereinigt wird,
wobei die vereinigten Einzelströmungen (KS1, KS2) das das Kegelprisma (20) enthaltende Ende der Einsatzhülse (19) umströmen und hinter dem Ende der Einsatzhülse (19) aufeinandertreffen,
wobei ein erster Anteil der Strömungen zur Stirnseite des Lichtwellenleiters (8) und ein zweiter Anteil der Strömungen zur Mitte des Schutzglases (14) gerichtet sind.

9. Steckerbauteil nach Anspruch 8, wobei das Kegelprisma (20) allseitig vom Kühlmedium umspült ist.

10. Steckerbauteil nach einem der Ansprüche 9 oder 10, wobei am Ende der Einsatzhülse (19) eine Halterung für das Kegelprisma (20) vorgesehen ist.

11. Steckerbauteil nach einem der Ansprüche 8 bis 10, wobei der Lichtwellenleiter (8) im Inneren des Gehäuses (10) über wenigstens einen Teil (b) seiner Länge abisoliert ist und er eine Stirnseite hat, die frei zugänglich ist.

12. Steckerbauteil nach Anspruch 11, wobei an der Stirnseite des Lichtwellenleiters (8) eine Antireflexschicht (20a) vorhanden ist.

13. Steckerbauteil nach einem der Ansprüche 8 bis 12, wobei das Kühlmedium eine Temperatur im Bereich von ca. -40°C bis ca. 300°C hat.

## Claims

1. A plug part for an optical waveguide (8), comprising
- a cylindrical housing (10) with a protective glass (14) provided at one end of the housing (10),
- an optical waveguide (8) which is arranged in the housing and comprises a front face (20a) at one end,
- at least one inlet bore (17) and at least one outlet bore (18) for a gaseous cooling medium,
- a sleeve-shaped cooling collar (12) which is supplied with the gaseous cooling medium, and
- a plurality of outflow openings (12a) which are radially arranged at the inner side in the cooling collar (12),
the outflow openings (12a) being arranged such that the gaseous cooling medium, supplied to the cooling collar (12), leaves the plurality of outflow openings (12a) in the form of individual flows,
the individual flows of the gaseous cooling medium converging in the middle of the cooling collar (12),
a first part of the individual flows being directed to the front face (20a) of the optical waveguide (8) and a second part of the individual flows being directed to the middle of the protective glass (14), the cooling medium being blown against the inner side of the protective glass,
a conical prism (20) being provided in the interior of the housing.

2. The plug part according to claim 1, wherein the cooling collar (12) comprises a plurality of outflow tubes (13) which are directed to a common point on the longitudinal center line of the cooling collar (12).

3. The plug part according to any of the preceding claims, wherein the optical waveguide (8) is bared at least along a section of its length in the interior of the housing (10), its front face being freely accessible.

4. The plug part according to any of the preceding claims, wherein the cooling medium flows around the conical prism essentially on all sides thereof.

5. The plug part according to claim 4, wherein the front face of the optical waveguide (8) is provided with an anti-reflective layer (20a).

6. The plug part according to any of the preceding claims, wherein the cooling medium is air, a gas such as O₂, N₂, Ar, CO₂, He, Xe, or a combination of these.

7. The plug part according to any of the claims 1 to 6, wherein the cooling medium has a temperature in the range from approximately -40°C to approximately 300°C.

8. A plug part for an optical waveguide (8), comprising
- a cylindrical housing (10) with a protective glass (14) provided at one end of the housing (10),
- an optical waveguide (8) which is arranged in the housing and comprises a front face at one end,
- at least one inlet bore (17) and at least one outlet bore (18) for a gaseous cooling medium, and
- an insert sleeve (19) placed in the plug part,
o a first annular space being formed between a bared section of the optical waveguide (8) and the insert sleeve (19),
o a second annular space being formed between the insert sleeve (19) and the housing (10),
o the first and second annular spaces being connected through holes (19a, b) provided in the insert sleeve (19), and
o a conical prism (20) being arranged at one end of the insert sleeve (19),
the insert sleeve (19) being supplied with the gaseous cooling medium in the form of a flow,
a first individual flow (KS 1) being guided through the first annular space and a second individual flow (KS2) being guided through the second annular space,
the first individual flow (KS 1) flowing over the bared section of the optical waveguide (8) and the conical prism (20), being united with the second individual flow (KS2) in the region of the hole (19b) when it has flown alongside the conical prism (20),
the united individual flows (KS1, KS2) flowing around the end of the insert sleeve (19) comprising the conical prism (20) and converging downstream of the end of the insert sleeve (19),
a first part of the united flows being directed to the front face of the optical waveguide (8) and a second part of the united flows being directed to the middle of the protective glass (14).

9. The plug part according to claim 8, wherein the cooling medium flows around the conical prism (20) essentially on all sides thereof.

10. The plug part according to any of claims 9 or 10, wherein a mounting for the conical prism (20) is provided at the end of the insert sleeve (19).

11. The plug part according to any of the claims 8 to 10, wherein the optical waveguide (8) is bared at least along a section (b) of its length in the interior of the housing (10) and comprises a front face which is freely accessible.

12. The plug part according to claim 11, wherein the front face of the optical waveguide (8) is provided with an anti-reflective layer (20a).

13. The plug part according to any of the claims 8 to 12, wherein the cooling medium has a temperature in the range from approximately -40°C to approximately 300°C.

## Revendications

1. Composant à fiche pour guide d'ondes optiques (8), comportant
- un boîtier cylindrique (10) présentant un verre de protection (14) prévu à une extrémité du boîtier (10),
- un guide d'ondes optiques (8) agencé dans le boîtier et comportant une face frontale (20a) côté extrémité,
- au moins un alésage d'entrée (17) et au moins un alésage de sortie (18) pour un agent réfrigérant gazeux, et
- une manchette de refroidissement (12) en forme de douille à laquelle l'agent réfrigérant gazeux est amené, et
- une pluralité d'orifices d'échappement (12a) agencés de façon radiale sur la face intérieure dans la manchette de refroidissement (12),
les orifices d'échappement (12a) étant agencés de telle sorte que l'agent réfrigérant gazeux amené à la manchette de refroidissement (12) s'échappe de la pluralité d'orifices d'échappement (12a) sous forme de flux,
les flux de l'agent réfrigérant gazeux se rencontrant au centre de la manchette de refroidissement (12),
une première partie des flux étant dirigée vers la face frontale (20a) du guide d'ondes optiques (8), et une deuxième partie des flux étant dirigée vers le centre du verre de protection (14) dont la face intérieure est balayée par l'agent réfrigérant,
un prisme sphérique (20) étant prévu à l'intérieur du boîtier.

2. Composant à fiche selon la revendication 1, dans lequel la manchette de refroidissement (12) présente une pluralité de tubes d'échappement (13) qui sont dirigés sur un point commun sur l'axe médian longitudinal de la manchette de refroidissement (12).

3. Composant à fiche selon l'une des revendications précédentes, dans lequel le guide d'ondes optiques (8) est dénudé à l'intérieur du boîtier (10) sur au moins une partie de sa longueur, et sa face frontale est librement accessible.

4. Composant à fiche selon l'une des revendications précédentes, dans lequel l'agent réfrigérant s'écoule de tous les côtés du prisme sphérique (20).

5. Composant à fiche selon la revendication 4, dans lequel une couche antireflet (20a) est présente sur la face frontale du guide d'ondes optiques (8).

6. Composant à fiche selon l'une des revendications précédentes, dans lequel l'agent réfrigérant est de l'air, un gaz tel que O₂, N₂, Ar, CO₂, He, Xe, ou une combinaison de ceux-ci.

7. Composant à fiche selon l'une des revendications 1 à 6, dans lequel l'agent réfrigérant a une température dans la plage entre environ -40°C et environ 300°C.

8. Composant à fiche pour un guide d'ondes optiques (8), comportant
- un boîtier cylindrique (10) présentant un verre de protection (14) prévu à une extrémité du boîtier (10),
- un guide d'ondes optiques (8) agencé dans le boîtier et présentant une face frontale côté extrémité,
- au moins un alésage d'entrée (17) et au moins un alésage de sortie (18) pour un agent réfrigérant gazeux, et
- une douille d'insertion (19) placée dans le composant à fiche,
o un premier espace annulaire étant réalisé entre la partie dénudée du guide d'ondes optiques (8) et la douille d'insertion (19),
o un deuxième espace annulaire étant réalisé entre la douille d'insertion (19) et le boîtier (10),
o le premier espace annulaire et le deuxième espace annulaire étant reliés par des alésages (19a, b) agencés dans la douille d'insertion (19), et
o un prisme sphérique (20) étant agencé à une extrémité de la douille d'insertion (19),
l'agent réfrigérant gazeux étant amené à la douille d'insertion (19) sous forme de flux,
un premier flux individuel (KS1) étant guidé à travers le premier espace annulaire, et un deuxième flux individuel (KS2) étant guidé à travers le deuxième espace annulaire,
le premier flux individuel (KS1) balayant la partie dénudée du guide d'ondes optiques (8) et le prisme sphérique (20) et étant joint au deuxième flux individuel (KS2) au niveau de l'alésage (19b) après avoir balayé le prisme sphérique (20),
les flux individuels (KS1, KS2) réunis s'écoulant autour de l'extrémité de la douille d'insertion (19) qui contient le prisme sphérique (20) et se rencontrant en aval de l'extrémité de la douille d'insertion (19),
une première partie des flux étant dirigée vers la face frontale du guide d'ondes optiques (8), et une deuxième partie des flux vers le centre du verre de protection (14).

9. Composant à fiche selon la revendication 8, dans lequel l'agent réfrigérant s'écoule de tous les côtés du prisme sphérique (20).

10. Composant à fiche selon la revendication 9 ou 10, dans lequel un support pour le prisme sphérique (20) est prévu à l'extrémité de la douille d'insertion (19).

11. Composant à fiche selon l'une des revendications 8 à 10, dans lequel le guide d'ondes optiques (8) est dénudé à l'intérieur du boîtier (10) sur au moins une partie (b) de sa longueur et présente une face frontale librement accessible.

12. Composant à fiche selon la revendication 11, dans lequel une couche antireflet (20a) est présente sur la face frontale du guide d'ondes optiques (8).

13. Composant à fiche selon l'une des revendications 8 à 12, dans lequel l'agent réfrigérant a une température dans la plage entre environ -40°C et environ 300°C.
